# EUROPEAN PATENT APPLICATION

(11) **EP 3 113 392 A1**
(43) Date of publication of application: **04.01.2017**
(21) Application number: 15306041.3
(22) Date of filing: 30.06.2015
(51) Int. Cl.: H04B 11/00, H04L 9/08, H04L 29/06, H04W 12/04

(54) **METHOD AND APPARATUS TO DISTRIBUTE AN ACCESS CREDENTIAL TO MULTIPLE DEVICES USING ULTRASONIC COMMUNICATION**

(71) Applicant: Thomson Licensing, 92130 Issy-les-Moulineaux (FR)
(72) Inventor: GILBERTON, Philippe, 35576 Cesson-Sévigné (FR); MAY, Martin, 92443 Issy-Les-Moulineaux (FR)
(74) Representative: Huchet, Anne

(57) **Abstract**

A method to distribute an access credential to multiple devices using ultrasonic communication includes a master device receiving the number of slave devices to receive the access credential and determining a distribution sequence for ultrasonic distribution communication between the master device and the plurality of slave devices. The access credential is divided into multiple credential chunks and one of the credential chunks is transmitted to each of the slave devices using the distribution sequence. The slave devices then share the credential chunks according to the distribution sequence and reconstruct the access credential which can then be used by the slave devices to access a wireless network.

## Description

### FIELD

The present invention relates to credential acquisition, specifically, the acquisition of credentials by multiple devices for wireless network authentication.

### BACKGROUND

Today, many ways exist to communicate information between mobile devices using wireless means such as IEEE 802.11 (WiFi), Bluetooth Low Energy (BLE), Near Field Communication (NFC), cellular, and the like. But, those wireless means are all based on ElectroMagnetic (EM) signals that do not prevent the channel or access point from being sniffed or hacked. Other technology methods can be envisioned to establish an ephemeral, private and secure communication channel for a limited duration within a circumvented space, such as in providing access to a WLAN. In the last few years, some industries have considered alternate solutions such as using an ultrasonic signal as a communication means. The main advantage for ultrasonic signal communication over radio frequency technology is the fact that the ultrasonic range is only a few meters and that it doesn't go through walls. So, ultrasonic technology is a much better choice for preventing or limiting interception by sniffing or hacking. Ultrasonic technology is also cost effective as it relies on current and available microphone and speakers equipping the mobile device and thus doesn't require extra interface modules.

Companies such as like Naratte™ and Pronto™ currently use this technology whose main use case is to perform a payment or to get a coupon. Chromecast™ is also a player in that field in using this technology inspired from SlickLogin™ acquisition for pairing devices. Patent Publication US2013/0176984 describes how to give access to WLAN in transmitting the establishment information through ultrasonic sound superimposed on an audible sound. The means of superimposing the establishment information over the sound would be based on watermarking. The information can include SSID and encryption key and also a password or identifier.

One problem with Near Field Communication (NFC) is that although it has a level of security with a single device, if multiple devices are within the reception range of NFC, then unauthorized monitoring and hacking can still occur. The solution disclosed herein is an alternative to NFC. One example problem of a WiFi configuration is how to securely and easily add new devices to a given WiFi network. Today, a provider of a WiFi network (end user or enterprise) has to provide information about the used SSID, login information and the password / keys. This exchange is always cumbersome and prone to typing errors. An alternative is desirable.

### SUMMARY

This summary is provided to introduce a selection of concepts in a simplified form as a prelude to the more detailed description that is presented later. The summary is not intended to identify key or essential features of the invention, nor is it intended to delineate the scope of the claimed subject matter.

In one embodiment, a method to distribute an access credential to multiple devices using ultrasonic communication includes a master device receiving the number of slave devices N to receive the access credential and determining a distribution sequence for ultrasonic distribution communication between the master device and the plurality of slave devices. The access credential is divided into N credential chunks and one of the credential chunks is transmitted to each of the N slave devices using the distribution sequence. The slave devices then share the credential chunks according to the distribution sequence and reconstruct the access credential which can then be used by the slave devices to access a wireless network.

In another embodiment, an apparatus to distribute an access credential to a plurality of slave devices using ultrasonic communication includes a processor to determine a distribution sequence for ultrasonic communication between the apparatus and the plurality of slave devices, the processor dividing the access credential into credential chunks. An ultrasonic transceiver, under control of the processor, for transmitting one credential chunk to each of the plurality of slave devices according to the distribution sequence is also included. The ultrasonic transceiver transmits the distribution sequence to the plurality of slave devices, wherein the plurality of slave devices share respective credential chunks between the plurality of slave devices according to the distribution sequence. The slave devices reconstruct the access credential at each of the plurality of slave devices after receiving a reconstruction sequence.

In another embodiment, an apparatus to reconstruct access credential for a wireless network where the apparatus is one of a plurality of slave devices and includes an ultrasonic transceiver to receive a chunk of the access credential and a distribution sequence transmitted by a master device. A processor is used to control the ultrasonic transceiver to transmit the received chunk to the plurality of slave devices, the transmitting occurring according to the distribution sequence. The ultrasonic transceiver receives a respective chunk from each of the plurality of slave devices, wherein multiple chunks of the access credential are received. A reconstruction sequence is also received and the processor acts to reconstruct the access credential using the reconstruction sequence. A network interface is used to access a wireless network using the reconstructed access credential.

Additional features and advantages of the invention will be made apparent from the following detailed description of illustrative embodiments which proceeds with reference to the accompanying figures. It should be understood that the drawings are for purposes of illustrating the concepts of the disclosure and is not necessarily the only possible configuration for illustrating the disclosure.

### BRIEF DESCRIPTION OF THE DRAWINGS

The foregoing summary of the invention, as well as the following detailed description of illustrative embodiments, is better understood when read in conjunction with the accompanying drawings, which are included by way of example, and not by way of limitation with regard to the claimed invention. In the drawings, like numbers represent similar elements.
Figure 1 depicts an example credential distribution setup according to an aspect of the invention;
Figure 2 depicts the content of slave units at the end of phase 1;
Figure 3 depicts the content of slave units at the end of phase 2;
Figure 4 depicts an example method conducted by a master device according to aspects of the invention;
Figure 5 depicts an example method conducted by a slave device according to aspects of the invention;
Figure 6 depicts an example implementation of a master or slave device.

### DETAILED DISCUSSION OF THE EMBODIMENTS

In the following description of various illustrative embodiments, reference is made to the accompanying drawings, which form a part thereof, and in which is shown, by way of illustration, how various embodiments in the invention may be practiced. It is to be understood that other embodiments may be utilized and structural and functional modification may be made without departing from the scope of the present invention.

The above problems may be addressed through the use of ultrasonic communication between the devices to be connected to an access point of a WLAN. Speakers and microphones are widely available for ultrasonic communications in most mobile devices, allowing for contactless data exchange. For the ultrasonic communication as used herein is defined as being above 20 kHz. This frequency range is supported by regular microphones and speaker technologies. In some embodiments, the message exchanges using ultrasonic communications may have a time-to-life information content to prevent replay attacks and to limit the validation of the messages. The current invention describes a method to securely establish an ephemeral ultrasonic communication enlarged from point to multipoint to give to the end user all the necessary credentials that will allow them to have access to a private WLAN.

The use of ultrasonic technology as presented herein provides access to a private WiFi network without explicitly exposing credentials such as a login name or a password. To achieve this benefit, the message sending method presented is sequenced in a way that every participant/receiver will get only a part of the overall key. To obtain and build the entire key to get full access to the WiFi network, all participants have to cooperate and build the full WLAN access key or other access credentials.

Other advantages of the present invention include the replacement of near field communications through ultrasonic communication, the use of off-the-shelf mobile devices that are all equipped of microphone and speakers as master or slave devices, contactless and secure communications, and avoidance of easy WLAN credential exposure because the credential is never transmitted in total to be intercepted by a would-be hacker.

An example use of the current invention will allow a meeting organizer equipped of a mobile device to securely configure the wireless access network for the external invitees also equipped each with a mobile device through a way that is effortless as it will not require any login or password divulgation. It is assumed that the number N of invitees is known in order to divide the necessary credential information by this number N. The credential information necessary to access to the wireless network could be composed of 4 elements: the SSID, the login name, the password, and an additional element is the number of slave devices N.

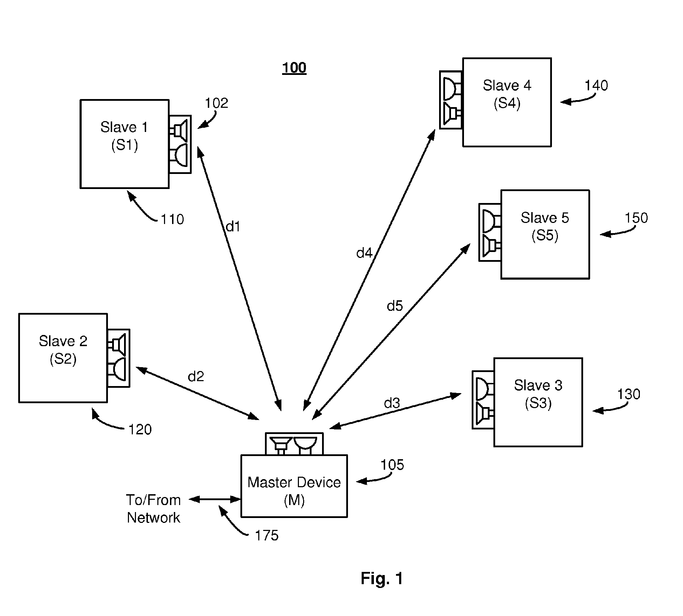

All of the above 4 elements are termed the Access Network Credential Information (ANCI), and will be divided into N chunks. First the meeting organizer will ask the invitees to power "on" their mobile devices and click on a dedicated application icon (app) which will put their device in an ultrasonic listening mode. The master mobile device (M) 105 belonging to the meeting organizer will be put on the meeting table as a center piece and all invitee's devices are placed physically around as shown in Figure 1.

Figure 1 depicts an example use of the present arrangement. The master device (M) 105 will broadcast, through ultrasonic transmission, the first chunk of the ANCI named ANCI1. Five slave devices are shown as an example; slave 1 (S1) 110, slave 2 (S2) 120, slave 3 (S3) 130, slave 4 (S4) 140, and slave 5 (S5) 150. Each slave device is equipped with a microphone and speaker set 102 (transceiver) that can function as the ultrasonic transmitter and receiver respectively. Since five slave devices are present in the ultrasonic listening sphere of master device 105, then the number of chunks that the ANCI is divided by is five. So 5 chunks will be necessary to reconstruct at the end the total ANCI. The principle of ANCI reconstruction is as follows.

First is the initialization phase that determines which slave will receive the first ANCI chunk. Prior to conducting the following actions, the organizer has entered the number of participant on his mobile device, such as a smartphone, tablet, laptop, PDA, or other mobile equivalent. This allows the organizer's device, termed the master device M to check that all participants have replied. To do so, a specific ultrasonic sequence message Seqᵢₙᵢ is broadcasted from the master device M device to the slave devices. The slave devices respond within an acknowledgement message providing their unique identifier (ID). When the master device M has received the N acknowledgements, corresponding to the N slave devices, the master device M will determine which slave device will receive the ANCI1 by sorting the slave devices by each acknowledgement arrival time. The arrival time will be unique as each slave device is physically located differently compared with the master device M device 105. That is, the distance between M 105 and the N slave devices are different. Per Figure 1, the distance between M and S1 is d1, the distance between M and S2 is d2, the distance between M and S3 is d3, the distance between M and S4 is d4, and the distance between M and S5 is d5 (see Figure 1). In time stamping the Seqᵢₙᵢ ultrasonic sequence message sending time and the acknowledgement arrival time within the M device, it is possible to know the order of time of arrival for each slave device. As an example of time of arrival the sequence is S2, S1, S4, S5 and S3. In the example embodiment to follow, this is the distribution sequence that will be used to distribute credential chunks and to finally reassemble a credential at each slave device. One of skill in the art will understand that other sequences are possible. Sequences are controlled by the master device M 105 may be generated using any technique such as a prefixed order, order by slave device name or number, order by random selection, order by distance from master device, and the like.

The process occurs in two phases. Phase 1 is defined as a respective ANCI chunk being distributed using sequential ultrasonic transmissions from the master device M device to the slave devices. In order for a slave device to interpret uniquely the first broadcasted ANCI chunk, ANCI1, the master device M device will encrypt the ANCI1 chunk with the unique ID of the first slave device in a distribution sequence such that only 1 slave device is able to interpret the ANCI1. Thus the sequential transmissions from the slave device M are as follows.

The master device M device broadcasts the encrypted ANCI1 with the S2 unique identifier (ID) to all slave devices that are in a listening mode. Only the first ranked slave device (S2 in the example) is able to decode the ANCI1 and it will store it and stop interacting. As a first embodiment, S2 will acknowledge this sequence by sending back a specific ultrasonic sound that will indicate to the master device M that the ANCI1 transmission ended successfully and that M can send the next message ANCI2. A second embodiment would be for the master device M to send sequentially the chunks from ANCI1 to ANCIN without waiting for acknowledge. The advantage of the first embodiment is that it verifies that the N chunk transmission sequencing to the correct slave has occurred.

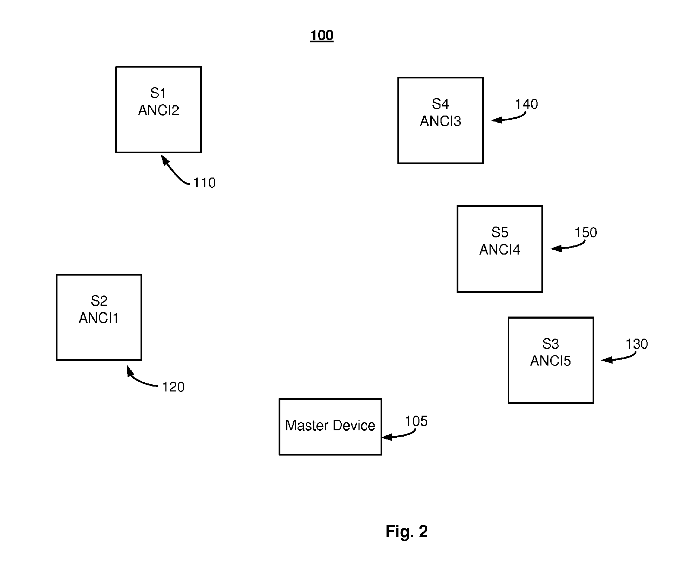

Then the M device sends the ANCI2 encrypted with S 1 unique ID to the slave devices. Only the 2nd ranked slave device is able to decode the ANCI2 and it will store it and stop interacting. This ANCI chunk transmission sequence will end when all slave devices have acknowledged successfully. The slave device status at the end this first phase is presented in Figure 2. At that moment each slave device has a different piece of the ANCI and could send as a final notification of the end of that phase a specific ultrasound signal to notify the M device that the first phase was performed successfully and that the phase 2 will begin.

To enhance the security and the prevention of hacking, the order sequence of sending the ANCI chunk could be totally arbitrary (i.e. random) as opposed to the distance-based sequence discussed above. If an arbitrary (random) sequence is implemented and managed by the M device, the M device could provide the order of the sequence to all slaves at the end of the phase 2. Additionally, to minimize the occurrence of replay attacks, a time of life or a limited number of repetitions of the sequence can be used by the device M. This action would also serve to limit the validation of the messages.

Phase 2 is the mutual exchange between slave devices of their missing ANCI chunks. During phase 2, each slave device will exchange the missing ANCI chunk with each other in order to get the complete number of ANCI chunks. As S2 was the first to stop listening it can be understood that S2 will first send/broadcast through ultrasonic communication its chunk ANCI1 to all listening slave devices. Each slave device which will capture successfully the ANCI1 will acknowledge by sending a specific ultrasonic signal to notify S2 that the capture was successful. As the slave device knows the number of total slaves, it can wait until all remaining slave devices have acknowledged successfully. Then slave S1 sends the ANCI2 in the same way. This procedure produces a buildup of ANCI chunks in each slave device. Starting with the distribution of chunks at the end of Phase 2, shown in figure 2, the following actions and slave content are built up:
- Slave chunk buildup at end of Phase 1: (S1 CONTAINS ANCI2), (S2 CONTAINS ANCI1), (S3 CONTAINS ANCI5), (S4 CONTAINS ANCI3), (S5 CONTAINS ANCI4)
- S2 sends ANCI1 results in (S1 CONTAINS ANCI2, ANCI1), (S2 CONTAINS ANCI1), (S3 CONTAINS ANCI5, ANCI1), (S4 CONTAINS ANCI3, ANCI1), (S5 CONTAINS ANCI4, ANCI1)
- S1 sends ANC2 results in (S1 CONTAINS ANCI2, ANCI1), (S2 CONTAINS ANCI1, ANCI2), (S3 CONTAINS ANCI5, ANCI1, ANCI2), (S4 CONTAINS ANCI3, ANCI1,ANCI2), (S5 CONTAINS ANCI4, ANCI1,ANCI2)
- S4 sends ANCI3 results in (S1 CONTAINS ANCI2, ANCI1, ANCI3), (S2 CONTAINS ANCI1, ANCI2, ANCI3), (S3 CONTAINS ANCI5, ANCI1, ANCI2, ANCI3), (S4 CONTAINS ANCI3, ANCI1,ANCI2), (S5 CONTAINS ANCI4, ANCI1,ANCI2, ANCI3)
- S5 sends ANCI4 results in (S1 CONTAINS ANCI2, ANCI1, ANCI3, ANCI4), (S2 CONTAINS ANCI1, ANCI2, ANCI3, ANCI4), (S3 CONTAINS ANCI5, ANCI1, ANCI2, ANCI3, ANCI4), (S4 CONTAINS ANCI3, ANCI1,ANCI2, ANCI4), (S5 CONTAINS ANCI4, ANCI1,ANCI2, ANCI3)
- S3 sends ANCI5 results in (S1 CONTAINS ANCI2, ANCI1, ANCI3, ANCI4, ANCI5), (S2 CONTAINS ANCI1, ANCI2, ANCI3, ANCI4, ANCI5), (S3 CONTAINS ANCI5, ANCI1, ANCI2, ANCI3, ANCI4), (S4 CONTAINS ANCI3, ANCI1,ANCI2, ANCI4, ANCI5), (S5 CONTAINS ANCI4, ANCI1,ANCI2, ANCI3, ANCI5)

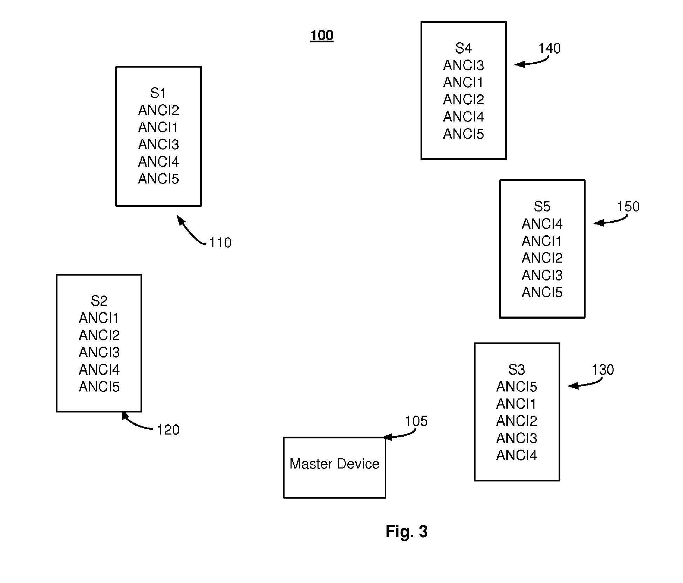

At this point, the end of phase 2, the contents of each slave device are as indicated in Figure 3. All slave devices have all the ANCI chunks. Now each device can reconstruct the total ANCI which will allow them to have all credential information to connect to the wireless network. As an option to finalize this phase a specific ultrasonic notification only interpretable by the M device can be broadcasted by the last slave device to signify that phase 2 was performed successfully.

At this point, the M device could send to each of the slave devices the specific order that the received chunks must have in order to reconstruct the credential information. Although the order of ANCI1 + ANCI2 +ANCI3 + ANCI4 + ANCI5 is the original credential order, each slave has received its chunks in various orders as indicated in Figure 3. For example, assuming that the chunks do not have the specific ANCI numbering on them while being transferred from the master device M to the slaves, then the order of receipt of the chunks become different for each slave. In correspondence, the order of reconstruction of the original credential is different for each slave. After phase 2, the device M can send each slave the order of its reconstruction in order to recover the original credential. Once the original credential is reconstructed, the slave devices can use the credential to access the desired wireless network.

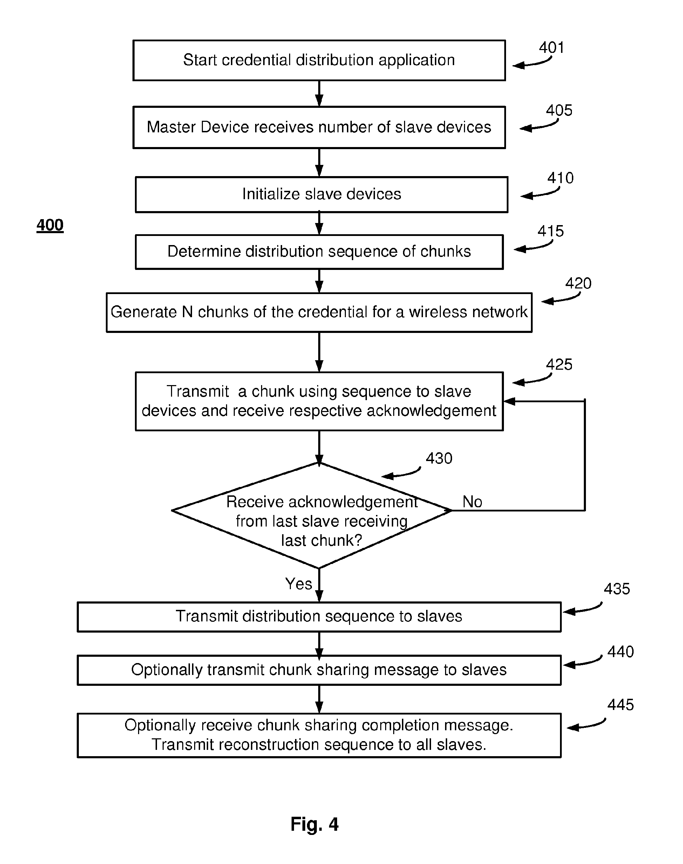

Figure 4 depicts an example method of a master device M 105 according to principles of the invention. Initially, a mobile device, termed a master device M, depicted in Figure 1 as master device 105 is arranged proximate to multiple slave devices, such as slaves S1 110 through S5 150 of Figure 1. The slave devices and master device each are configured with microphones and speakers 102 that act as ultrasonic receivers and transmitters. Each slave device is configured with a mobile device application that enables the ultrasonic authentication method described herein. In addition, the master device is also equipped with the ultrasonic authentication application, but is acting as the master device. The ultrasonic credential application allows credential chunk reception and reconstruction on each slave device.

At step 401, the ultrasonic credential application that allows the master mobile device to distribute a credential to slave devices is initiated. At step 405, the master device M receives the number N of the slave devices. Typically, this number may be entered by a user of the device M 105 or it may be a selection or a fixed or pre-selected value. At step 410 the slave devices, assumed to be turned on, are initiated. Step 410 involves sending to the slave devices an ultrasonic sequence initialization message Seqᵢₙᵢ which allows the master device M to establish communication with the slave devices that are in range and to check if all N slave participants have replied. The slave devices respond to the Seqᵢₙᵢ with an acknowledgement transmission from the slave to the master device M and provide the slave device unique ID.

At step 415, the device M determines the order of distribution (distribution sequence) of the chunks to the slave devices. There are several options for performing this operation. In one embodiment, an order of which slave will receive by sorting them by each arrival time. The arrival time will be unique as each slave device is placed differently against M device meaning the distance between M and the slave devices are different (see Figure 1). In time stamping the Seqᵢₙᵢ message sending time and the acknowledgement arrival time within the M device, it is possible to know the order of time of arrival for each slave devices. Thus, time of arrival (i.e. distance of slave to master) can be used to set a distribution sequence order for the distribution of the chunks of the credential from the master device to the slave devices.

As will be described below, the distribution sequence is also a distribution communication sequence because it is the sequence used to initially distribute chunks of an access credential to the slaves via an ultrasonic communication. Thus, the distribution sequence can also be termed an ultrasonic distribution communication sequence because the distribution sequence controls the order of the communication from the master device to the slave devices of the credential chunks.

Once the number N of the slave devices needing an authorization credential is determined in step 405 and verified in step 410, then the Access Network Credential Information (ANCI) can be determined. The ANCI information can be the SSID of the wireless network to be accessed by the slave devices, the login name, the password, and the number of slave devices N. this information is divided into N number of separate chunks at step 420. Each chunk is identified with a chunk identifier. In an example, chunks ANCI1 thorough ANCI5 are determined if the number of slaves is 5. Steps 405. 410, 415, and 420 may be performed in an order different from that of example method 400 of Figure 4 before distribution of the chunks begins at step 425.

In step 425, chunks of the ANCI are transmitted to each slave in the distribution sequence determined in step 415. Step 425 also includes receiving acknowledgements from slaves that have received respective chunks. For example, in the example embodiment of Figures 1-3, a first chunk ANCI1 is sent to slaves in the sequence order of S2, S1, S4, S5 and S3. A transmission to S2 of chunk ANCI1 is encrypted with the S2 unique ID (for example the unique MAC address of S2 device) such that only S2 is able to decode and store the ANCI1 chunk. After S2 sends an acknowledgement of the successful reception, decoding, and storing of ANCI1, then ANCI2 is sent encrypted with the ID of the next slave in the distribution sequence order. In the examples of Figures 1-3 that slave is S1. After S1 receives and acknowledges the proper receipt of ANCI2, then the device M goes on to distribute ANCI3 encrypted with the unique ID of the next ordered slave in the distribution sequence and so on. Finally, the master device M receives the last acknowledgement from the last slave in the distribution sequence of the last chunk (e.g. ANCI5) at step 430. The distribution of chunks of the credential to slaves in steps 425 and 430 represents the completion of phase 1 of the method. At step 435, the master device M transmits the distribution sequence of step 415 via broadcast message to all slaves. In this manner each slave becomes aware of the its position in the sequence. As explained below, this sequence is used in the sharing of ANCI chunks between the slave devices in phase 2.

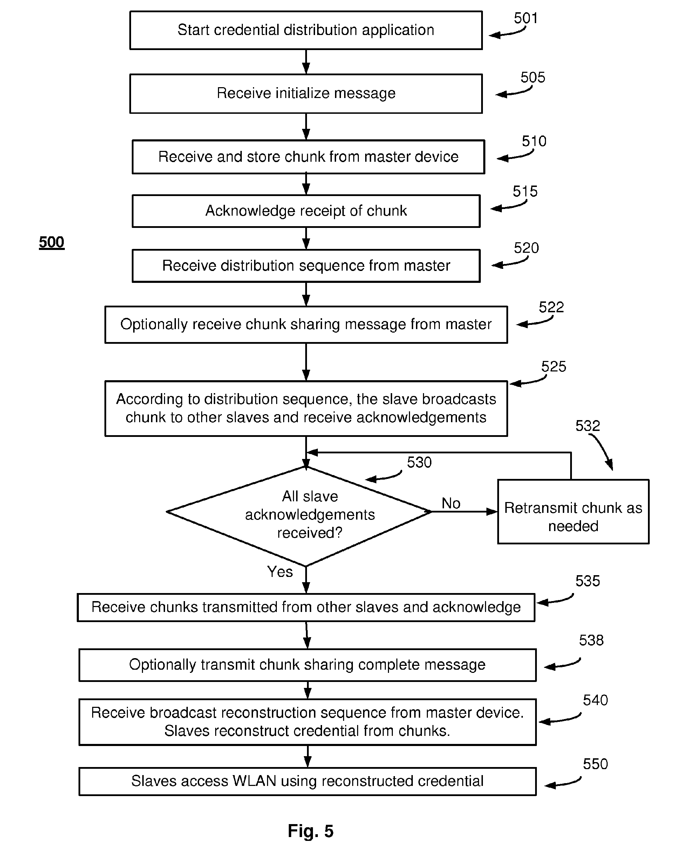

At step 440, device M may optionally send a message to all of the slave devices to start phase 2 of the method. In phase 2, the slaves share their respective chunks of the ANCI credential. Phase 2 is completed when all of the slaves have received all of the ANCI chunks. This event is optionally reported to the master device M at step 445 by a transmission from the last slave in the distribution sequence receiving the last shared chunk of the credential. At this point each slave device has all of the chunks of the credential. The method a sharing of the various chunks of credential is described using Figure 5. At step 445, the master device M transmits, via ultrasonic communication, the sequence of reconstruction to all slave devices in a broadcast message. The reconstruction sequence is a message containing an arrangement needed by each individual slave device to reconstruct the access credential. For example, looking at Figure 3, it is seen that the order of arrival of the various chunks of the access credential is different in each slave device. Thus, each slave device must know the order in which to arrange the chunks to reconstruct the access credential. The reconstruction sequence provided by the master device M at step 445 provides the needed order of the arrangement of chunks to reconstruct the access credential.

Figure 5 is an example method performed by a slave device according to the present invention. The method 500 of a slave device to receive a distribution of chunks of credentials states with step 501. At step 501, the ultrasonic credential application that allows the slave mobile device to receive a wireless network credential is initiated. At step 505, the slave device receives an initiation message from the master device M. Ultrasonic sequence initialization message Seqᵢₙᵢ is received and the slave device responds with an acknowledgement transmission from the slave to the master device M providing the slave device unique ID.

At step 510, the slave device receives a communication from the master device M. The communication is one of the chunks of the credential needed to access a wireless network. The credential intended for a specific slave is encrypted with the slave ID so that only the slave having the corresponding ID can properly decode the chunk that is transmitted. The slave device receives the intended chunk at step 510 and stores the chunk. At step 515, the slave device acknowledges that the chunk has been received and decoded by sending to the master device M an acknowledgement message. At the master device, upon reception of the acknowledgement, the master device M continues to send out chunks of the credential. Phase 1 is completed when all of the slave devices have received their respective ANCI chunk and have acknowledged receipt to the master device M.

At step 520, the slave receives the distribution sequence from the master. The distribution sequence is transmitted via an ultrasonic broadcast transmission to all slave devices. As an option, if the collection of slave devices can be organized as a multicast group, then an ultrasonic multicast transmission may be made. In either event the slave receives the distribution sequence which is used in the chunk sharing process and credential reconstruction process described below.

At step 522, the slave may optionally receive a chunk sharing message from the master device M to begin phase 2. Steps 525, 530, and 532 function to have the slave transmit its chunk received in phase 1 to all other slaves using the distribution sequence. Step 525 starts phase 2 that allows slaves to exchange their mutual ANCIs until they have all of them ready for reconstruction. Step 525 functions to share the received chunk, such as those in the Figure 3 example, with another slave devices according to the distribution sequence using ultrasonic communication with the other slaves. Step 530 tests if the chunk previously sent to the now transmitting sharing slave has been distributed to all of the other slave devices. This test is accomplished by checking if acknowledgements were received from the all slave devices on the distribution sequence. If not, step 532 retransmits the chunk either via a rebroadcast transmission or via a unicast transmission to those individual slave devices that have not yet acknowledged receipt of the chunk being shared. Step 532 loops to step 530 to continue checking the receipt acknowledgement of the chunk with the other slave devices. If the chunk held by the particular slave device is distributed to all of the other slave devices, then the process 500 can advance. Overall, the transmissions to the slave devices are made according to the earlier received distribution sequence of step 520. All reception and transmissions in steps 510 to step 538 are conducted using ultrasonic transmitters and receivers such as speakers and microphones.

Assuming that the particular slave completes step 530, then that slave receives other chunks transmitted from other slave devices at step 535. Note that according to where in the distribution sequence the slave is, step 535 may be performed before steps 525 and 530. At step 538, a slave, such as the last slave in the distribution sequence may optionally transmit a chunk sharing complete message to the master device M. At step 540, the slave devices receive, via ultrasonic communication, the sequence of reconstruction in a broadcast message. The reconstruction sequence is a message containing an arrangement needed by each individual slave device to reconstruct the access credential. For example, looking at Figure 3, it is seen that the order of arrival of the various chunks of the access credential is different in each slave device must know the order in which to arrange the chunks to reconstruct the access credential. The reconstruction sequence received by the slave device at step 540 provides the needed order of the arrangement of chunks to reconstruct the access credential. When a slave device has received all N of the chunks and the reconstruction sequence, the device may begin to reconstruct the credential from the various chunks at step 540. After the credential is reconstructed, the slave may then use the credential to access the wireless network in step 550. Access to the wireless network, such as a WLAN, by the slave devices occurs using a radio frequency RF link such as that used with IEEE 802.11 or the like.

It should be noted that the master and slave devices respond to each other via the functionality of Figures 4 and 5. Thus, the master device and slave devices work together to achieve the result of ultrasonic distribution to a number of slave devices of an access credential for a wireless network. Thus, even though Figures 4 and 5 are depicted and described separately, they may be combined to perform the function of ultrasonic communication of an access credential.

Alternative embodiments to the above-described example are possible. For example, instead of sharing the ANCI chunks, the ultrasonic communication system can also use encoded chunks, including redundant information from the neighbor nodes. Such a coding scheme transforms a message of N symbols (corresponding to the N participants) into a longer message (code word) with n symbols (strictly lower than the N) such that the original message can be recovered from a subset of the n symbols.

The advantage of this alternate embodiment is a higher redundancy of the system. That means that not all participating devices have to cooperate (due to node failures or departures). In turn, such an extension of the basic principles to the alternate embodiment also opens the system for attacks, so a compromise between security and redundancy should be addressed. However, in the alternate embodiment, the system will also be faster in exchanging the ANCI chunks as the nodes do not need to wait until all nodes sent their part of the code.

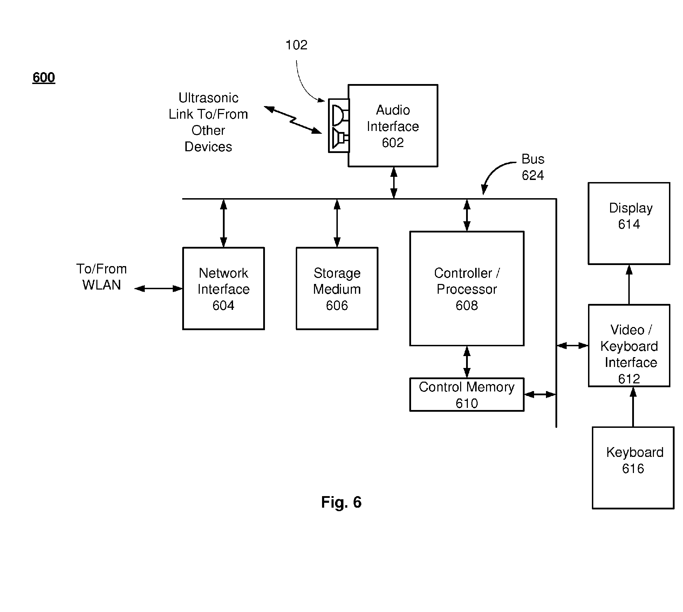

Figure 6 is an example implementation of either a master or a slave device. Generally, the master or slave device is a mobile device such as but not limited to a cell phone, PDA, tablet, laptop, wearable electronic device, and the like. Device 600 can be used as either a master or a slave due to the presence of an application program that is installed in the device allowing functionality of either the master method of Figure 4 or the slave method of Figure 5. In the device, an internal bus 624 interconnects the various functions. In general, the device 600 includes a network interface 604 allowing an RF interface to a core network, such as a WLAN.

A hardware controller/processor 608 is used to execute instructions, the instructions being resident on either the control memory 610 or the storage medium 606. The controller/processor 608 executes application program instructions, such as those resulting from flow diagrams of Figure 4 and/or Figure 5 in order to provide the functionality aspects of the invention. Storage medium 606 and control memory 610 may be any memory known to those of skill in the art such as RAM, ROM, optical or magnetic disk, and the like. A video and keyboard interface 612 unit serves as an interface to the bus 624 so that instructions generated by the keyboard 616 may be received and interpreted by the controller processor 608. Also, unit 612 drives a display 614 which may be used as both an output and an input device. For example, display 614 is capable of being a touch screen which enables a user of device 600 to interact with the contents rendered on the display.

Audio interface 602, having an ultrasonic transceiver 102, is an ultrasonic interface allowing the transmission and reception of ultrasonic communications between master device and slave devices according to the principles of the invention. Although this interface is shown as being one unit, the audio interface may be split up as an audio speaker for transmission of ultrasonic messages or a microphone for reception of ultrasonic messages. The elements of device 600 support the functionality presented in Figures 1-5. In particular, the processor 608, executing instructions from the storage medium 606 or memory 610, is configured to interface to the above-described components to provide the functionality of the methods of both the master device M 105 or the slave devices S1-S5 110-150. One of skill in the art will appreciate that the particular implementation shown in Figure 6 has reasonable equivalents, such as non-bus oriented devices, systems on a chip, or other implementations that serve the save functionality.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, or via a hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random access memory ("RAM"), a read-only memory ("ROM") or any other magnetic, optical, or solid state media. The instructions may form an application program tangibly embodied on a computer-readable medium such as any of the media listed above or known to those of skill in the art. The instructions thus stored are useful to execute elements of hardware and software to perform the steps of the method described herein.

## Claims

1. A method to distribute an access credential to multiple devices using ultrasonic communication, the method comprising:
determining, by a master device, a distribution sequence for ultrasonic distribution communication between the master device and a plurality of slave devices (415);
dividing, by the master device, the access credential into credential chunks (420);
transmitting, by the master device using ultrasonic communication, one credential chunk to each of the plurality of slave devices using the distribution sequence (425);
sharing credential chunks between slave devices according to the distribution sequence (525); and
transmitting, by the master device using ultrasonic communication, a reconstruction sequence from the master device to the plurality of slave devices (445);
reconstructing the access credential by the slave devices (540); and
using the reconstructed access credential to access a wireless network (550).

2. The method of claim 1, wherein dividing, by the master device, the access credential into credential chunks comprises dividing the access credential by a number of the plurality of slave devices.

3. The method of claim 1, wherein determining, by the master device, a distribution sequence for ultrasonic distribution communication between the master device and the plurality of slave devices comprises determining the distribution sequence based on a distance between the master device and each of the plurality of slave devices.

4. The method of claim 1, wherein transmitting, by the master device using ultrasonic communication, one credential chunk to each of the plurality of slave devices using the distribution sequence comprises transmitting one credential chunk to each of the plurality of slaves device and receiving an acknowledgement from each slave device.

5. The method of claim 1, wherein transmitting, by the master device using ultrasonic communication, one credential chunk to each of the plurality of slave devices using the distribution sequence comprises transmitting one credential chunk to each of the plurality of slaves device via an encryption using an identifier of a respective slave to receive a respective one credential chunk.

6. The method of claim 1, wherein sharing credential chunks between slave devices according to the distribution sequence comprises transmission between slave devices of credential chunks using ultrasonic communication.

7. The method of claim 1, wherein reconstructing the access credential by the slave devices comprises reconstructing the access credential by the slave devices using the reconstruction sequence.

8. The method of claim 1, wherein using the reconstructed access credential to access a wireless network comprises using the reconstructed access credential to access a WLAN using RF communications.

9. An apparatus to distribute an access credential to a plurality of slave devices using ultrasonic communication, the apparatus comprising:
a processor (608) to determine a distribution sequence for ultrasonic communication between the apparatus and the plurality of slave devices, the processor dividing the access credential into credential chunks;
an ultrasonic transceiver (102), under control of the processor (608), for transmitting one credential chunk to each of the plurality of slave devices according to the distribution sequence;
the ultrasonic transceiver transmitting (102) the distribution sequence to the plurality of slave devices, wherein the plurality of slave devices share respective credential chunks between the plurality of slave devices according to the distribution sequence and reconstruct the access credential at each of the plurality of slave devices.

10. The apparatus according to claim 9, wherein the ultrasonic transceiver transmits a reconstruction sequence via broadcast message to all of the plurality of slave devices, wherein the reconstruction sequence is used by the slave devices to reconstruct the access credential.

11. The apparatus of claim 9, wherein the distribution sequence for ultrasonic communication between the apparatus and the plurality of slave devices comprises determining the distribution sequence based on a distance between the apparatus and each of the plurality of slave devices.

12. An apparatus to reconstruct access credential for a wireless network, the apparatus one of a plurality of slave devices, the apparatus comprising:
an ultrasonic transceiver (102) to receive a chunk of the access credential and a distribution sequence transmitted by a master device;
a processor (608) to control the ultrasonic transceiver (102) to transmit the received chunk to the plurality of slave devices, the transmitting occurring according to the distribution sequence;
the ultrasonic transceiver (102) receiving a respective chunk from each of the plurality of slave devices, wherein multiple chunks of the access credential are received;
the ultrasonic receiver (102) receiving a reconstruction sequence;
the processor (608) acting to reconstruct the access credential using the reconstruction sequence; and
a network interface (604) to access a wireless network using the reconstructed access credential.

13. The apparatus according to claim 12, wherein the ultrasonic transceiver transmits acknowledgement messages to the master device after receiving the chunk of the access credential.

14. The apparatus according to claim 12 wherein the ultrasonic transceiver transmits acknowledgements to a respective slave device after receiving the respective chunk from a slave device.
